# EUROPEAN PATENT APPLICATION

(11) **EP 1 657 836 A2**
(43) Date of publication of application: **17.05.2006**
(21) Application number: 05024703.0
(22) Date of filing: 11.11.2005
(51) Int. Cl.: H04H 1/00

(54) **Mobile communications terminal for receiving digital multimedia broadcasting and system thereof**

(30) Priority: 12.11.2004 KR 2004092634
(71) Applicant: LG Electronics Inc., Yongdungpo-gu Seoul (KR)
(72) Inventor: Kim, Woo-Seong, Gyeonggi-do (KR)
(74) Representative: Katérle, Axel

(57) **Abstract**

A mobile communications terminal for receiving a digital multimedia broadcasting and a system thereof are discussed. The system in one aspect includes a broadcasting terminal for broadcasting a received digital multimedia broadcasting signal, and at least one mobile communications terminal for displaying the digital multimedia broadcasting signal broadcast from the broadcasting terminal.

## Description

### BACKGROUND OF THE INVENTION

### Field of the Invention

The present invention relates to a mobile communications terminal, and particularly, to a mobile communications terminal and a system thereof to enable reduction of a manufacturing cost of a mobile communications terminal capable of receiving a digital multimedia broadcasting.

### Description of the Background Art

In general, a mobile communications terminal is a communication device capable of providing a wireless call to another party and providing a wireless connection anytime and anywhere by a switching control of a MSC (Mobile Switching Center) while moving in a service region served by a BS (Base Station), such that data communications using symbols, numbers, characters, or the like, and multimedia communications including images and videos as well as voice communications can be performed.

Various mobile communications terminals, which can provide various functions, such as broadcasting terminals, PDA (Personal Digital Assistants) terminals, smart terminals, or the like, have recently been developed. In particular, the development of the broadcasting terminal has been accelerated, so as to enable support of a digital multimedia broadcasting including audio, video and data services using a satellite.

An exemplary explanation for a digital multimedia broadcasting (DMB) terminal among the various broadcasting terminals will now be made. The DMB terminal receives broadcast guide information through an EPG (Electronic Programming Guide) channel and then displays the received broadcast guide information. According to this, the user selects a broadcasting channel which the user wants to use, so that the DMB terminal can receive a digital multimedia broadcasting signal through the selected broadcasting channel.

Accordingly, the DMB terminal has been developed as a complex form of portable and mobile broadcasting receiving terminals, which may be generally classified into (1) a form capable of providing functions of a general mobile communications terminal, (2) a form capable of being installed in vehicles, and (3) a form which can not provide functions of the general mobile communications terminal.

In order to receive the digital multimedia broadcasting, the DMB terminal should be properly set up. However, the cost of a DMB chip which can process audio, video and data through the satellite and service prices are quite high, thereby increasing a user's burden.

As aforementioned, because the conventional DMB terminal processes the audio, video and data received through the satellite by using the DMB chip, the DMB chip of the high cost should be installed therein, which results in increased manufacturing costs for the DMB terminals.

### SUMMARY OF THE INVENTION

Therefore, an object of the present invention is to provide a mobile communications terminal and a system thereof for receiving a digital multimedia broadcasting in which a digital multimedia broadcasting signal received through a radio interface by a broadcasting terminal is broadcast to at least one or more mobile communications terminals, to thus reduce manufacturing costs of mobile communications terminals which can receive the digital multimedia broadcasting signal.

Another object of the present invention is to provide a mobile communication terminal and system, which overcome the limitations and disadvantages associated with the background art.

To achieve these and other advantages and in accordance with the purpose of the present invention, as embodied and broadly described herein, there is provided in one aspect of the present invention a system for receiving a digital multimedia broadcasting, the system comprising a broadcasting terminal for broadcasting a received digital multimedia broadcasting signal, and at least one mobile communications terminal for displaying the digital multimedia broadcasting signal broadcast from the broadcasting terminal.

In another aspect of the present invention, there is provided a mobile communications terminal for receiving a digital multimedia broadcasting, the mobile communication terminal comprising a receiving unit for receiving a digital multimedia broadcasting signal broadcast from a broadcasting terminal, and a display unit for displaying the received digital multimedia broadcasting signal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 shows principles for receiving a digital multimedia broadcasting in a mobile communications terminal in accordance with an embodiment of the present invention;
Fig. 2 shows a configuration of a system for receiving a digital multimedia broadcasting in accordance with the present invention; and
Fig. 3 shows a protocol spec applied to a system for receiving a digital multimedia broadcasting in accordance with the present invention.

### DETAILED DESCRIPTION OF THE PREFERRED EMBODIMENTS

Reference will now be made in detail to some embodiments of the present invention, examples of which are illustrated in the accompanying drawings. Various components and procedures that would be known or understood to those skilled in the art will not be described in detail herein to prevent the features of the invention from being obscured.

Hereinafter, in accordance with embodiments of the present invention with reference to the accompanying drawings, explanations will be made for a mobile communications terminal and a system thereof for receiving a digital multimedia broadcasting in which a digital multimedia broadcasting signal received through a radio interface by a broadcasting terminal is broadcast to at least one or more mobile communications terminals, to thus reduce manufacturing costs of mobile communications terminals which can receive the digital multimedia broadcasting signal. Also, the broadcasting terminal according to the present invention can be applied to a Digital Multimedia Broadcasting (DMB) system, and also applied to any system capable of transmitting and receiving a digital multimedia broadcasting signal, such as Digital Video Broadcasting Handheld (DVB-H), Media-Forward Link Only (Media-Flo), such systems being different from one another in each nation or each region.

In preferred embodiments of the mobile communications terminal for receiving the digital multimedia broadcasting according to the present invention, the mobile communications terminal may not be limited to a mobile phone but may represent one of terminals including PDAs (Personal Digital Assistants), computer notebooks, and the like.

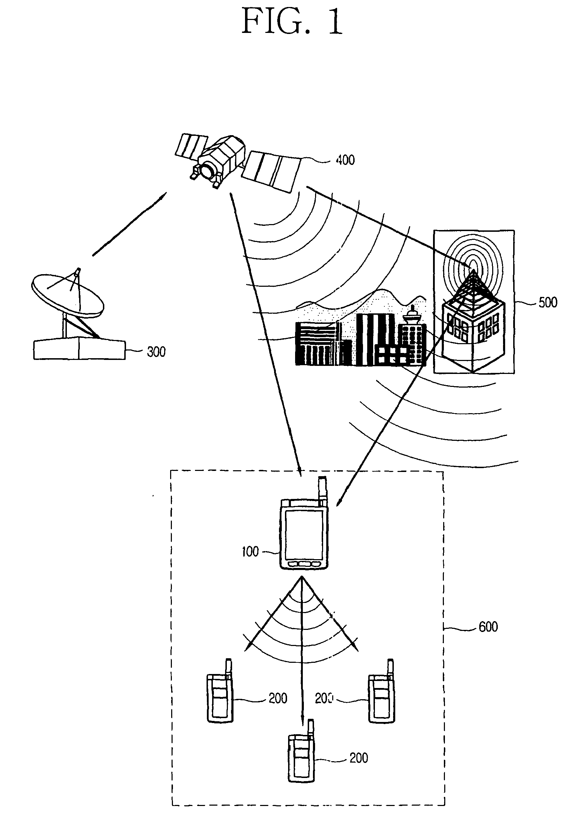

Fig. 1 illustrates principles for receiving a digital multimedia broadcasting in a mobile communications terminal according to an embodiment of the present invention.

Referring to Fig. 1, a system for receiving a digital multimedia broadcasting according to an embodiment of the present invention includes: a satellite 400 for providing a digital multimedia broadcasting service from a broadcasting service provider 300; a broadcasting terminal 100 for receiving a digital multimedia broadcasting signal through the satellite 400; and at least one or more mobile communications terminals 200 each for receiving the digital multimedia broadcasting signal from the broadcasting terminal 100. Here, a gap filler 500 may be further included, such that the digital multimedia broadcasting signal received from the satellite 400 is broadcast to the mobile communications terminal(s) 200 within shadow areas.

At this time, preferably, the broadcasting terminal 100 is a terminal for providing functions of a general mobile communications terminal 200, for instance, a call transmission/reception, a message transmission/reception or an image capturing with a camera as well as receiving a digital multimedia broadcasting signal.

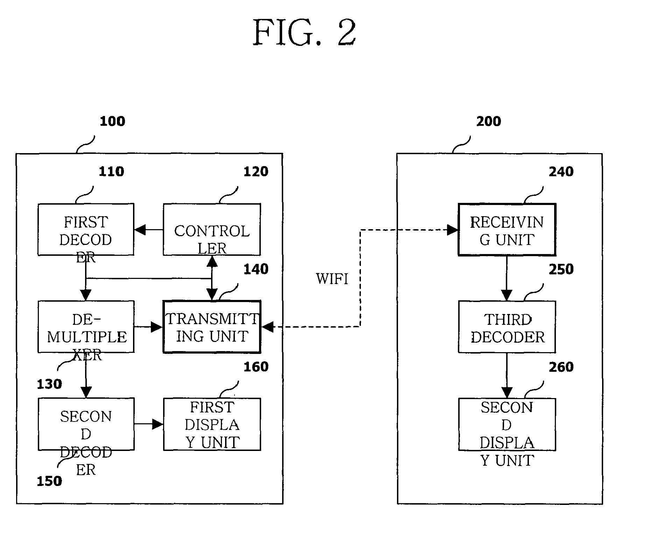

Hereinafter, the system for receiving a digital multimedia broadcasting according to the present invention will be explained with reference to Fig. 2.

Fig. 2 shows an exemplary configuration of the system for receiving a digital multimedia broadcasting in accordance with an embodiment of the present invention.

Referring to Fig. 2, in the system for receiving a digital multimedia broadcasting in accordance with the present invention, the broadcasting terminal 100 includes a first decoder 110, a controller 120, a De-Multiplexer (De-MUX) 130, a transmitting unit 140, a second decoder 150, and a first display unit 160; and the mobile communications terminal 200 includes a receiving unit 240 for receiving the digital multimedia broadcasting from the broadcasting terminal 100, a third decoder 250, and a second display unit 260. All the components of the terminals 100 and 200 are operatively coupled.

An operational principle of the system for receiving the digital multimedia broadcasting in accordance with an embodiment of the present invention having such construction will now be explained in detail.

First of all, the broadcasting terminal 100 receives broadcasting guide information through an EPG channel and displays the received broadcasting guide information on the first display unit 160 to be suitable for a user environment. Using the broadcasting guide information, the user can select a broadcasting channel which the user wants to use, so that the broadcasting terminal 100 can receive the digital multimedia broadcasting signal through the user-selected broadcasting channel.

The first decoder 110 decodes the digital multimedia broadcasting signal received through the user-selected broadcasting channel and outputs the decoded digital multimedia broadcasting signal to the DE-MUX 130. The DE-MUX 130 extracts an MPEG 4 ES (Elementary Stream) from the received digital multimedia broadcasting signal and outputs the extracted MPEG 4 ES.

At this time, the DE-MUX 130 can output the extracted MPEG 4 ES to the second decoder 150 to thus display it on the first display unit 160 of the broadcasting terminal 100 and also output the extracted MPEG 4 ES to the transmitting unit 140 to thus display it in the mobile communications terminal 200.

Afterwards, the second decoder 150 decodes the received MPEG 4 ES and outputs the decoded MPEG 4 ES to the first display unit 160. Accordingly the broadcasting terminal 100 can display the digital multimedia broadcasting signal received through the satellite on the first display unit 160. Here, the second decoder 150 may be constructed as a system decoder, Advanced Video Coding (AVC) decoder, Bit Sliced Arithmetic Coding (BSAC) decoder, or the like.

The transmitting unit 140, on the other hand, transmits the MPEG 4 ES outputted from the DE-MUX 130 to a service area, for instance, in a vehicle or in a building, and thereby the receiving unit 240 of the mobile communications terminal 200 belonging to the service area can receive the transmitted MPEG4 ES. Here, one or more mobile communications terminals 200 each can receive the digital multimedia broadcasting service within the service area. Further, the transmitting unit 140 and the receiving unit 240 can use a Wireless Internet Platform for Interoperability (WIFI ) or the like as a wireless Internet platform to communicate with each other.

For instance, the broadcasting terminal 100 can be installed in a vehicle 600 shown in FIG. 1. In that case, the broadcasting terminal 100 in the vehicle (stationary or moving) receives the digital multimedia broadcasting signal through the satellite 400, so as to enable transmission of the received digital multimedia broadcasting signal to the vehicle through the transmitting unit 140. Then, one or more mobile communications terminals 200 (which may be installed in the vehicle 600) can receive the digital multimedia broadcasting signal transmitted from the broadcasting terminal 100 to thereafter display the received digital multimedia broadcasting signal. The element 600 can represent other entity such as a building, a house, etc.

For a wireless communication with the broadcasting terminal 100, the mobile communications terminals 200 needs to be registered with the broadcasting terminal 100. The mobile communications terminal 200 can also be registered with a plurality of different broadcasting terminals. Thus the mobile communications terminal 200 can select one of the plurality of broadcasting terminals registered with the mobile communications terminal 200, to thereby easily connect to the desired broadcasting terminal 100. This selection can be done in various ways, e.g., by selecting a broadcasting terminal among a list of registered broadcasting terminals shown on the second display unit 260. The mobile communication terminal 200 can store in its memory the list of registered broadcasting terminals for selection.

Additionally, the mobile communications terminal 200 requests a particular channel to view to the transmitting unit 140 of a selected broadcasting terminal such as 100 registered in the mobile communications terminal 200 through the receiving unit 240. For instance, the selection of a particular broadcasting channel can be made by a user after the user views the broadcasting guide information provided by the selected broadcasting terminal 100. Thereafter, the controller 120 of the selected broadcasting terminal 100 outputs a control signal to the first decoder 110 so as to enable receipt of the digital multimedia broadcasting signal corresponding to the requested channel.

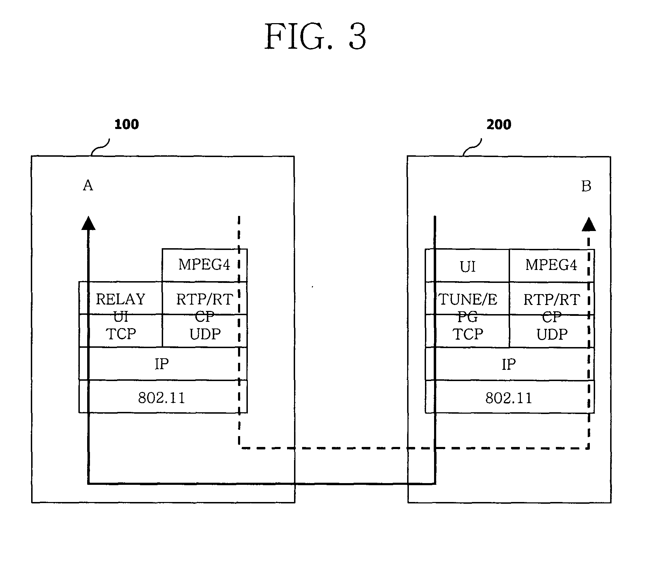

A protocol spec applied to the transmitting unit of the broadcasting terminal and the receiving unit of the mobile communications terminal will now be explained with reference to Fig. 3.

Fig. 3 illustrates a protocol spec applied to a system for receiving a digital multimedia broadcasting in accordance with an embodiment of the present invention. The protocol spec as applied to the system of FIG 2 is discussed below. However, the invention is not limited thereto and the protocol spec is applicable to other systems.

Referring to Fig. 3, the mobile communications terminal 200 requests the broadcasting terminal 100 for a channel which the user wants to receive (watch) (A). The broadcasting terminal 100 then receives a digital multimedia broadcasting signal corresponding to the requested channel, and the received digital multimedia broadcasting signal is thus provided to the mobile communications terminal 200 (B).

Accordingly, the third decoder 250 of the mobile communications terminal 200 decodes the MPEG 4 ES (digital multimedia broadcasting signal) received from the broadcasting terminal 100 and outputs the decoded MPEG 4 ES. The mobile communications terminal 200 can thereby display the digital multimedia broadcasting signal received through the satellite 400 on the second display unit 260. Here, the third decoder 250 may be constructed as a system decoder, Advanced Video Coding (AVC) decoder, Bit Sliced Arithmetic Coding (BSAC) decoder, or the like.

The protocol layers (e.g., MPEG 4, UI (user interface), TCP (transmission control protocol), IP (Internet protocol), RTP (realtime transport protocol), RTCP (realtime transport control protocol), etc.) shown in FIG. 3 are known and are used to implement the steps/processes performed by the components of the terminals 100 and 200, e.g., as shown in FIG. 2.

As described so far, in the mobile communications terminal and the system for receiving the digital multimedia broadcasting according to the present invention, the digital multimedia broadcasting signal can be broadcast to one or more mobile communications terminals through the broadcasting terminal using a radio interface, so as to enable reduction of manufacturing costs of the mobile communications terminal capable of receiving the digital multimedia broadcasting signal.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A system for receiving a digital multimedia broadcasting, the system comprising:
a broadcasting terminal for broadcasting a received digital multimedia broadcasting signal; and
at least one mobile communications terminal for displaying the digital multimedia broadcasting signal broadcast from the broadcasting terminal.

2. The system of claim 1, wherein the broadcasting terminal includes a transmitting unit for broadcasting the received digital multimedia broadcasting signal to the at least one mobile communications terminal.

3. The system of claim 2, wherein the transmitting unit receives a signal for requesting a broadcasting channel selected by a user.

4. The system of claim 1, wherein each of the at least one mobile communications terminal includes a receiving unit for receiving the broadcast digital multimedia broadcasting signal from the broadcasting terminal.

5. The system of claim 4, wherein the receiving unit outputs a signal for requesting a broadcasting channel selected by a user, to the broadcasting terminal.

6. The system of claim 1, wherein the mobile communications terminal is a mobile phone, a Personal Digital Assistants (PDA), or a computer notebook.

7. The system of claim 1, wherein the broadcasting terminal receives the digital multimedia broadcasting signal through a satellite.

8. The system of claim 1, wherein the broadcasting terminal is provided in a vehicle or building.

9. The system of claim 8, wherein the at least one mobile communications terminal is provided in the same vehicle or building.

10. The system of claim 1, wherein the broadcasting terminal and the at least one mobile communications terminal communicate with each other via WIFI (wireless Internet platform for interoperability).

11. A mobile communications terminal for receiving a digital multimedia broadcasting, the mobile communications terminal comprising:
a receiving unit for receiving a digital multimedia broadcasting signal broadcast from a broadcasting terminal; and
a display unit for displaying the received digital multimedia broadcasting signal.

12. The mobile communications terminal of claim 11, wherein the mobile communications terminal stores therein a list of different broadcasting terminals with which the mobile communications terminal registered.

13. The mobile communications terminal of claim 12, wherein a user selects a particular broadcasting terminal from the list so as to receive a digital multimedia broadcasting signal from the selected broadcasting terminal.

14. The mobile communications terminal of claim 13, wherein the receiving unit outputs a signal for requesting a broadcasting channel selected by the user, to the selected broadcasting terminal.

15. The mobile communications terminal of claim 11, wherein the receiving unit outputs a signal for requesting a broadcasting channel selected by a user, to the broadcasting terminal.

16. The mobile communications terminal of claim 11, wherein the mobile communications terminal is a mobile phone, a Personal Digital Assistants (PDA), or a computer notebook.

17. The mobile communications terminal of claim 11, wherein the receiving unit receives the digital multimedia broadcasting signal from the broadcasting terminal provided in a vehicle or building.

18. The mobile communications terminal of claim 17, wherein the mobile communications terminal is provided in the same vehicle or building.

19. The mobile communications terminal of claim 11, wherein the broadcasting terminal and the at least one mobile communications terminal communicate with each other via WIFI (wireless Internet platform for interoperability).

20. The system of claim 1, wherein the broadcasting terminal is configured to selectively display on its display unit the digital multimedia broadcasting signal.
